# EUROPÄISCHE PATENTSCHRIFT

(11) **EP 0 592 869 B1**
(45) Veröffentlichungstag und Bekanntmachung des Hinweises auf die Patenterteilung: **18.12.1996**
(21) Anmeldenummer: 93115718.4
(22) Anmeldetag: 29.09.1993
(51) Int. Cl.: B01D 19/00, B01D 35/14, B01D 36/00

(54) **Filter**
Filter
Filtre

(30) Priorität: 10.10.1992 DE 4234232
(43) Veröffentlichungstag der Anmeldung: 20.04.1994
(73) Patentinhaber: ARGO GmbH für Fluidtechnik, 76703 Kraichtal-Menzingen (DE)
(72) Erfinder: Hoefer, Wolfgang, D-75015 Bretten (DE)
(74) Vertreter: Hoeger, Stellrecht & Partner

(56) Entgegenhaltungen:
- WO-A-90/01130
- FR-A- 1 532 437
- US-A- 3 224 585

## Beschreibung

Die Erfindung betrifft einen Filter mit einem in einen Flüssigkeitsbehälter eindrehbaren Stutzen, mit einem den Stutzen oberhalb des Flüssigkeitsbehälters überfandenden Deckel und mit wenigstens einem Filterelement im Deckel.

Derartige Filter werden beispielsweise als Einfüll- und Belüftungsfilter an Hydrauliköltanks bei Baumaschinen oder dgl. eingesetzt. Der Filter wird durch Anfassen an seinem Deckel mit seinem Stutzen in ein entsprechendes Innengewinde des Tanks eingedreht. Da Baumaschinen und dgl. häufig nachts unbeaufsichtigt an Baustellen stehen, können unbefugte Personen den Filter aus dem Tank herausdrehen, entwenden, Öl aus dem Tank abfüllen und den Tank verschmutzen.

Man hat bereits zur Behebung dieses Übelstandes, ähnlich wie bei den Tanks von Personenkraftwagen, den Deckel mit einem Schlüssel versehen, bei dessen Betätigung der Deckel relativ zum Stutzen frei drehbar wird, so daß ein Herausdrehen des Stutzens aus dem Tank durch Anfassen am Deckel unmöglich wird (Prospekt: "UCC Einfüll- und Belüftungsfilter" 1987). Ferner ist es bei einem Filter anderer Art bekannt (DE 33 29 835 C1), einen Schraubbolzen durch ein Sicherheitselement so zu schützen, daß erst nach Lösen einer Entlüftungsschraube und Verschieben des Sicherheitselements ein Gabelschlüssel an den Kopf des Schraubbolzens angelegt werden kann.

Alle diese Lösungen sind verhältnismäßig aufwendig und störanfällig, insbesondere wenn Schlösser mit in sie passenden Schlüsseln vorgesehen werden.

Es ist Aufgabe der Erfindung, den geschilderten Mängeln abzuhelfen und ein gattungsgemäßes Filter in einfacher Weise ohne Verwendung von Schloß und Schlüssel so auszubilden, daß ein unbefugtes Herausdrehen des Filters aus dem Flüssigkeitsbehälter ausgeschlossen ist.

Die Aufgabe wird bei einem gattungsgemäßen Filter durch die Erfindung dadurch gelöst, daß der Deckel mit dem Stutzen ständig endlos frei drehbar verbunden ist und am Stutzen zwischen Deckel und Flüssigkeitsbehälter eine Anlegefläche für ein Werkzeug ausgebildet ist, mit dem der Stutzen im Flüssigkeitsbehälter verdreht werden kann.

Hierdurch wird in vorteilhafter Weise erreicht, daß dann, wenn der Filterstutzen mit dem an seinen Anlegeflächen angreifenden Werkzeug fest mit dem Flüssigkeitsbehäler verbunden ist, er über den ständig endlos frei drehbaren Deckel von Unbefugten nicht mehr aus dem Flüssigkeitsbehälter herausgedreht werden kann.

Merkmale bevorzugter Ausführungsformen der Erfindung sind Gegenstand der Unteransprüche 2 bis 8.

Die nachstehende Beschreibung einer bevorzugten Ausführungsform der Erfindung dient im Zusammenhang mit beiliegender Zeichnung der weiteren Erläuterung. Es zeigen:
- Fig. 1: schematisch in teilweise aufgeschnittener Seitenansicht einen in einen Flüssigkeitsbehälter eingedrehten Filter und
- Fig. 2: eine Untenansicht des Filters aus Fig. 1 mit einem strichpunktiert angedeuteten Werkzeug zum Verdrehen eines Stutzens des Filters im Flüssigkeitsbehälter.

Der auf der Zeichnung dargestellte Filter 1 besteht aus einem zentralen Filterstutzen 2, der mittels eines Außengewindes 3 in ein entsprechendes Innengewinde 4 an der Einfüllöffnung 5 eines Flüssigkeitsbehälters 6, beispielsweise eines Hydrauliköltanks einer Baumaschine eingedreht ist. Statt der Gewinde 3, 4 könnte auch ein durch Verdrehung betätigter Bajonettverschluß vorgesehen sein.

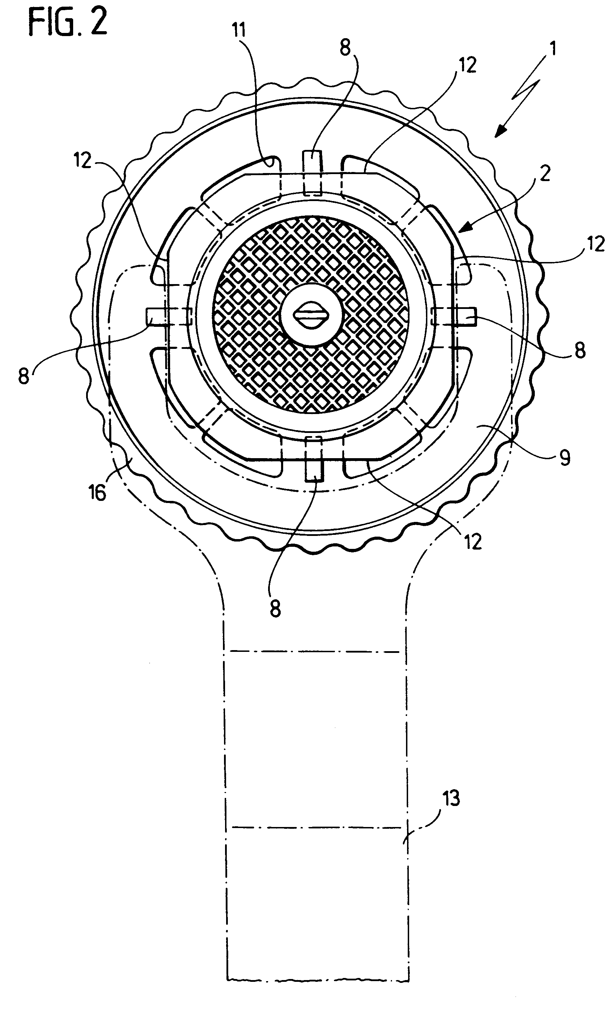

Der Stutzen 2 umfaßt ein zentrales Rohr 7, das über Stege 8 mit einem Ringbund 9 fest verbunden ist, der seinerseits mit nach unten zum Flüssigkeitsbehälter 6 hin gerichteten Lufteintrittsöffnungen 11 versehen ist. Der Stutzen 2 ist an seiner Außenseite unmittelbar über der Oberseite des Flüssigkeitsbehälters 6 mit vier einander jeweils parallel gegenüberliegenden Anlegeflächen 12 für ein Werkzeug 13 versehen, vgl. auch Fig. 2, in der ein Werkzeug 13 in Gestalt eines Gabelschlüssels an zwei einander gegenüberliegende Anlegeflächen 12 angelegt ist. Mit Hilfe dieses Werkzeugs 13 kann der Stutzen 2 fest in den Flüssigkeitsbehälter 6 eingeschraubt werden. Wie dargestellt, sind die Anlegeflächen 12 an einem nach außen gerichteten Flansch 14 des Stutzens 2 ausgebildet. Zwischen Flansch 14 und Flüssigkeitsbehälters 6 ist eine Dichtung 15 eingelegt.

Über den Ringbund 9 des Stutzens 2 ist ein Deckel 16 aus leicht elastischem Werkstoff gestülpt, der mit einem unteren, radial nach einwärts vorspringenden Rand 17 über die untere Außenkante des Ringbundes 9 derart eingeschnappt ist, daß der Deckel 16 ständig endlos frei drehbar mit dem Stutzen 2 verbunden ist. Es ist also nicht möglich, durch Drehen am Deckel 16, den Stutzen 2 fest in den Flüssigkeitsbehälter 6 einzuschrauben oder den fest in den Behälter 6 eingeschraubten Stutzen 2 vom Behälter 6 abzulösen.

Der Deckel 16 enthält in herkömmlicher Weise ein sternförmig gefaltetes Papier-Filterelement 18, das z.B. in den Deckel 16 eingeklebt ist. Zwischen Stutzen 2 und Deckel 16 sind in herkömmlicher Weise zwei Ventile vorgesehen, nämlich ein von einer Feder 19 vorgespanntes Lufteinlaßventil 21 und ein von einer Feder 22 belastetes Luftauslaßventil 23. Das Luftauslaßventil 23 ist ein ringförmiger, mit einer Dichtung 24 versehener, im Stutzen 2 axial verschieblicher Block, an dessen Unterseite das plattenförmige Ventil 21 anliegt. Der Öffnungsdruck des Luftauslaßventils 23 kann beispielsweise etwa 0,5 bar betragen, während der Öffnungsdruck des Lufteinlaßventils beispielsweise bei etwa -0,03 bar liegen kann. Wenn eines der Ventile 21 oder 23 geöffnet ist, kann Luft über das Filterelement 18 aus dem Flüssigkeitsbehälter 6 aus bzw. in diesen eintreten.

Die das Ventil 23 belastende Feder 22 ist an einer in den Deckel 16 eingelegten Unterlegscheibe 25 aus widerstandsfähigem Material, beispielsweise Metall, abgestützt. Die Feder 22 erzeugt gleichzeitig einen Reibschluß zwischen Stutzen 2 und Deckel 16, so daß insoweit eine reibschlüssige Verbindung zwischen diesen beiden Teilen besteht und der Stutzen 2 durch Anfassen am Deckel 16 zumindest im Verlauf der ersten Drehungen lose in den Flüssigkeitsbehälter 6 eingeschraubt werden kann, und zwar so lange, bis der Reibwiderstand der Gewinde 3, 4 so groß wird, daß zur weiteren Eindrehung und zum festen Anziehen des Stutzens 2 im Flüssigkeitsbehälter 6 das erwähnte Werkzeug 13 benutzt werden muß. Danach ist der Deckel 16 wiederum unter Überwindung des erwähnten Reibschlusses ständig endlos frei auf dem Stutzen 2 drehbar.

Ein zwischen dem Stutzen 2 und dem fest mit dem Deckel 16 verbundenen Filterelement 18 angeordneter Dichtungsring 26 dient ebenfalls der Erzeugung eines Reibschlusses zwischen Stutzen 2 und Deckel 16.

Es emphielt sich, dem Gabelschlüssel 13 (Fig. 2) eine von der Norm abweichende Schlüsselweite zu geben und den Abstand zwischen den Anlegeflächen 12 entsprechend auszubilden. Hierdurch ist verhindert, daß Unbefugte mit normalen Gabelschlüsseln den Stutzen 2 aus dem Flüssigkeitsbehälter 6 herausdrehen.

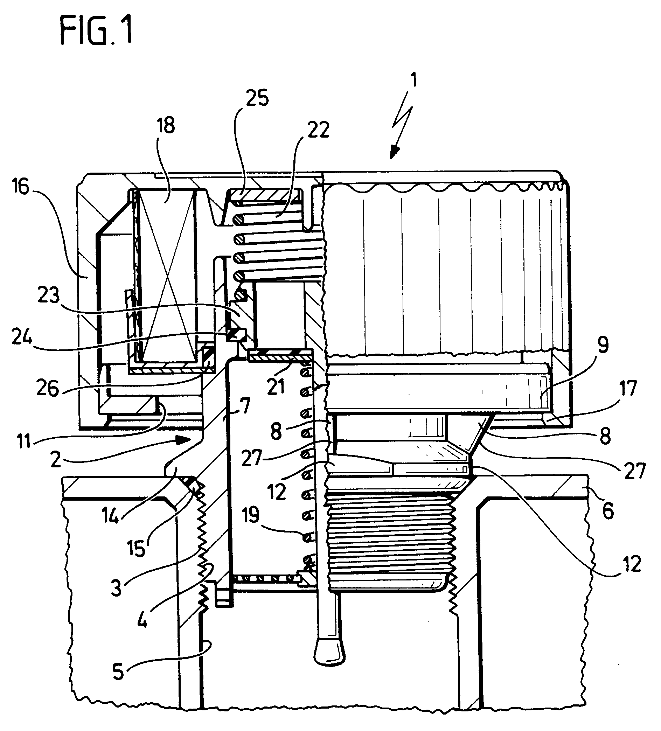

Weiterhin sind, wie insbesondere aus Fig. 1 ersichtlich, die zwischen dem Ringbund 9 und dem Flansch 14 vorgesehenen Stege 8 an ihrer Außenseite mit Schrägflächen 27 ausgestattet, die bis in unmittelbare Nähe der Anlegeflächen 12 für das Werkzeug 13 reichen. Die Stege 8 wirken auf diese Weise als Begrenzungsstege und verhindern, daß Gabelschlüssel normaler Dicke an die Anlegeflächen 12 angelegt werden können. Wenn somit der in Fig. 2 als Werkzeug 13 dargestellte Gabelschlüssel eine von der Norm abweichende Schlüsselweite sowie eine ebenfalls von der Norm abweichende Dicke hat, um an den Stegen 8 vorbei an die Anlegeflächen 12 angelegt zu werden, ist eine relativ große Sicherheit dafür gegeben, daß Unbefugte den Stutzen 2 vom Flüssigkeitsbehälter 6 nicht ablösen können.

Das Werkzeug 13 muß nicht unbedingt als Gabelschlüssel ausgebildet sein. Es ist möglich, am Flansch 14 ein oder mehrere, nach außen offene Radialbohrungen vorzusehen, in die als Werkzeug ein Stab eingesteckt werden kann, mit dessen Hilfe der Stutzen 2 dann im Flüssigkeitsbehälter 6 verdrehbar ist.

## Patentansprüche

1. Filter mit einem in einen Flüssigkeitsbehälter (6) eindrehbaren Stutzen (2), mit einem den Stutzen (2) oberhalb des Flüssigkeitsbehälters (6) überfangenden Deckel (16) und mit wenigstens einem Filterelement (18) im Deckel (16), wobei
der Deckel (16) mit dem Stutzen (2) ständig endlos frei drehbar verbunden ist und
am Stutzen (2) zwischen Deckel (16) und Flüssigkeitsbehälter (6) eine Anlegefläche (12) für ein Werkzeug (13) ausgebildet ist, mit dem der Stutzen (2) im Flüssigkeitsbehälter (6) verdreht werden kann.

2. Filter nach Anspruch 1, dadurch gekennzeichnet, daß der Stutzen (2) und der Deckel (16) unter Reibschluß drehbar miteinander verbunden sind.

3. Filter nach Anspruch 2, dadurch gekennzeichnet, daß der Reibschluß durch eine zwischen Stutzen (2) und Deckel (16) angeordnete Feder (22) erzeugt ist.

4. Filter nach Anspruch 3, dadurch gekennzeichnet, daß das eine Ende der Feder (22) im Deckel (16) an einer Unterlegscheibe (25) abgestützt ist.

5. Filter nach Anspruch 2, dadurch gekennzeichnet, daß der Reibschluß durch einen Dichtungsring (26) zwischen Stutzen (2) und Deckel (16) erzeugt ist.

6. Filter nach Anspruch 1, dadurch gekennzeichnet, daß am Stutzen (2) einander gegenüberliegend wenigstens zwei Anlegeflächen (12) für einen Gabelschlüssel vorgesehen sind.

7. Filter nach Anspruch 6, dadurch gekennzeichnet, daß der Gabelschlüssel eine von der Norm abweichende Schlüsselweite hat.

8. Filter nach Anspruch 1, dadurch gekennzeichnet, daß zwischen Deckel (16) und Flüssigkeitsbehälter (6) Begrenzungsstege (8) angeordnet sind, welche lediglich die Einführung eines Werkzeuges (13) begrenzter Dicke gestatten.

## Claims

1. A filter having a connection piece (2) which can be screwed into a tank (6), having a lid (16) overlapping the connection piece (2) above the tank (6) and having at least one filter element (18) in the lid (16), wherein the lid (16) is connected continuously in freely rotatable manner with the connection piece (2) and a bearing surface (12) for a tool (13), with which the connection piece (2) can be twisted in the tank (6), is constructed on the connection piece (2) between lid (16) and tank (6).

2. A filter according to Claim 1,
**characterised in that** the connection piece (2) and the lid (16) are rotatably connected to one another by frictional engagement.

3. A filter according to Claim 2,
**characterised in that** the frictional engagement is produced by a spring (22) disposed between connection piece (2) and lid (16).

4. A filter according to Figure 3,
**characterised in that** the one end of the spring (22) is supported in the lid (16) on a washer (25).

5. A filter according to Claim 2,
**characterised in that** the frictional engagement is produced by a sealing ring (26) between connection piece (2) and lid (16).

6. A filter according to Claim 1,
**characterised in that** at least two bearing surfaces (12) for a fork wrench are provided lying opposite one another on the connection piece (2).

7. A filter according to Claim 6,
**characterised in that** the fork wrench has a width deviating from the standard.

8. A filter according to Claim 1,
**characterised in that** limiting webs (8), which only allow the introduction of a tool (13) of limited thickness, are disposed between lid (16) and tank (6).

## Revendications

1. Filtre comportant un piquage (2) agencé pour être vissé sur un réservoir (6) de fluide, un couvercle (16) qui recouvre le réservoir (6) de fluide au dessus du piquage (2) et au moins un élément de filtre (18) logé dans le couvercle (16), filtre dans lequel :
- le couvercle (16) est relié constamment au piquage (2), à rotation libre sans fin, et
- une surface d'appui (12), destinée à un outil (13) au moyen duquel le piquage (2) peut être vissé sur ou dévissé du réservoir (6) de fluide, est formée sur le piquage (2), entre le couvercle (16) et le réservoir (6) de fluide

2. Filtre selon la revendication 1, caractérisé en ce que le piquage (2) et le couvercle (16) peuvent être assemblés l'un à l'autre par friction.

3. Filtre selon la revendication 2, caractérisé en ce que la friction nécessaire est réalisée par un ressort (22) disposé entre le piquage (2) et le couvercle (16).

4. Filtre selon la revendication 3, caractérisé en ce qu'une extrémité du ressort (22) s'appuie à l'intérieur du couvercle (16) sur une rondelle (25)

5. Filtre selon la revendication 2, caractérisé en ce que la friction nécessaire est réalisée par un joint d'étanchéité (26) disposé entre le piquage (2) et le couvercle (16).

6. Filtre selon la revendication 1, caractérisé en ce qu'au moins deux surfaces d'appui (12) qui se font face sont prévues sur le piquage (2) pour une clé à fourche.

7. Filtre selon la revendication 6, caractérisé en ce que la largeur de clé de la clé à fourche n'est pas conforme à la norme.

8. Filtre selon la revendication 1, caractérisé en ce que des voiles de démarcation (8), qui ne permettent d'introduire qu'un outil (13) d'épaisseur limitée, sont agencés entre le couvercle (16) et le réservoir (6) de fluide.
